# EUROPÄISCHE PATENTSCHRIFT

(11) **EP 3 800 864 B1**
(45) Veröffentlichungstag und Bekanntmachung des Hinweises auf die Patenterteilung: **23.11.2022**
(21) Anmeldenummer: 19200672.4
(22) Anmeldetag: 01.10.2019
(51) Int. Cl.: H04L 67/00, H04L 67/12, H04L 67/55

(54) **VERFAHREN ZUM KONFIGURIEREN EINES OPC UA PUBSUB TEILNEHMERS, AUTOMATISIERUNGSSYSTEM, COMPUTERPROGRAMM UND COMPUTERLESBARES MEDIUM**
METHOD FOR CONFIGURATION OF AN OPC UA PUBSUB PARTICIPANT, AUTOMATION SYSTEM, COMPUTER PROGRAM AND COMPUTER READABLE MEDIUM
PROCÉDÉ DE CONFIGURATION D'UN PARTICIPANT OPC UA PUBSUB, SYSTÈME D'AUTOMATISATION, PROGRAMME INFORMATIQUE ET SUPPORT LISIBLE PAR ORDINATEUR

(43) Veröffentlichungstag der Anmeldung: 07.04.2021
(73) Patentinhaber: Siemens Aktiengesellschaft, 80333 München (DE)
(72) Erfinder: Höme, Stephan, 91126 Schwabach (DE); Kerschbaum, Sven, 90768 Fürth (DE); Volkmann, Frank, 90475 Nürnberg (DE)

(56) Entgegenhaltungen:
- CN-A- 107 454 092
- US-A1- 2018 262 592
- ASTRIT ADEMAJ: "PTCC - TSN Endstation Centralized Configuration Interface for OPC UA PubSub Systems", IEEE DRAFT; 60802-ADEMAJ-PTCC-0918-V05, IEEE-SA, PISCATAWAY, NJ USA , Bd. 802.1, Nr. v05 18. September 2019 (2019-09-18), Seiten 1-24, XP068154859, Gefunden im Internet: URL:http://grouper.ieee.org/groups/802/1/f iles/public/docs2019/60802-ademaj-PTCC-091 8-v05.pdf [gefunden am 2019-09-18]
- Opc Fopundation: "OPC Unified Architecture Specification Part 14: PubSub Release 1.04", , 6. Februar 2018 (2018-02-06), XP055522628, Gefunden im Internet: URL:https://opcfoundation.org/developer-to ols/specifications-unified-architecture/pa rt-14-pubsub [gefunden am 2018-11-09]
- ANDREAS BURGER ET AL: "Automatisierte Inbetriebnahme von Industriellen IoT-Systemen in der Prozessautomatisierung: Eine Referenzarchitektur", AUTOMATISIERUNGSTECHNIK - AT., Bd. 67, Nr. 3, 26. März 2019 (2019-03-26), Seiten 172-182, XP055674891, DE ISSN: 0178-2312, DOI: 10.1515/auto-2018-0089

## Beschreibung

Die Erfindung betrifft ein Verfahren zum Konfigurieren wenigstens eines OPC UA PubSub Teilnehmers in einem insbesondere industriellen Netzwerk. Darüber hinaus betrifft die Erfindung ein Automatisierungssystem, ein Computerprogramm und ein computerlesbares Medium.

OPC UA (OPC Unified Architecture) ist ein industrielles Standardprotokoll der OPC Foundation zur hersteller-unabhängigen Kommunikation für den Austausch von Maschinendaten insbesondere in der Prozess- sowie Fertigungsautomatisierung.

Von der OPC Foundation (https://opcfoundation.org/) ist eine mehrteilige Spezifikation zu OPC Unified Architecture veröffentlicht worden (https://opcfoundation.org/developer-tools/specifications-unified-architecture/).

OPC UA ist auch in Kapitel 4 des vom DIN Institut für Normung e.V. herausgegebenen Buches "Industrie 4.0 - Industrielle Kommunikation - Basistechnologie für die Digitalisierung der Industrie" von Markus Weinländer, 2017, VDE Verlag, ISBN 978-3-8007-4262-2 (VDE Verlag) behandelt.

OPC UA PubSub (Publish/Subscribe) ist eine Erweiterung des bisherigen Client/Server-basierten Ansatzes von OPC UA. Die PubSub-Erweiterung ist in Teil 14 der Spezifikation näher erläutert (OPC Foundation: OPC Unified Architecture, Part 14: PubSub, Release 1.04, 6. Februar 2018, https://opcfoundation.org/developer-tools/specifications-unified-architecture/part-14-pubsub/).

Der Standard Part 14 erweitert das bis zu diesem Zeitpunkt bestehende Request/Response-Verfahren um einen Publish-Subscribe-Kommunikationsmechanismus. Beim Publish/Subscribe-Ansatz sendet ein Publisher seine Daten in ein Netzwerk und alle Subscriber können diese Daten empfangen (one-to-many). Des Weiteren wird seit November 2018 in der OPC UA Foundation an einer möglichen Verwendung von OPC UA Pub/Sub in der Feldebene (OPC UA FLC) gearbeitet (siehe den Artikel "Major Automation Industry Players join OPC UA including TSN initiative" unter https://opcfoundation.org/news/press-releases/majorautomation-industry-players-join-opc-ua-including-tsninitiative/ sowie den Artikel "New Initiative: Field Level Communications: OPC Foundation extends OPC UA including TSN down to field level" unter https://opcfoundation.org/news/press-releases/opc-foundationextends-opc-ua-including-tsn-down-to-field-level/). Dabei eignet sich OPC UA PubSub nach Auffassung der Anmelderin insbesondere für die Maschine-zu-Maschine Kommunikation, während der Prozessdatenaustausch zwischen den IO-Geräten und dem Controller bevorzugt wie bisher über Profinet/Profinet TSN erfolgen kann. OPC UA PubSub ist somit eine passende Ergänzung zum Feldbus Profinet (TSN).

In Kapitel 6 des Standards (Part 14) sind die Kommunikationsparameter von PubSub genannt und erläutert. Der Part 14 des Standards beschreibt auch die möglichen Transport Protocol Mappings (UDP, Ethernet, AMQP, MQTT) und Message Mappings (UADP, JSON). Kapitel 9 beschreibt das PubSub Konfigurationsmodell.

Aus "PTCC - TSN Endstation Centralized Configuration Interface for OPC UA PubSub Systems", IEEE DRAFT, 60802-ADEMAJ-PTCC-0918-V05, IEEE-SA, PISCATAWAY, NJ USA ist ein Verfahren entsprechend dem Oberbegriff von Patentanspruch 1 bekannt. In US 2018/262592 A1 ist ein Verfahren zum Konfigurieren eines Teilnehmers beschrieben, bei dem auf einem zum Teilnehmer separaten Konfigurationsmodul für den Teilnehmer ein virtueller Adressraum vorgesehen wird. Im virtuellen Adressraum mittels Methodenaufrufen wird eine Konfiguration für den Teilnehmer vorgenommen. Die Konfiguration wird durch das Konfigurationsmodul in eine Nachricht umsetzt, die an den Teilnehmer übertragen wird. Der Teilnehmer wird dann gemäß dieser Nachricht konfiguriert.

Die Konfiguration von OPC UA PubSub-Kommunikationsteilnehmern kann heute gemäß dem Standard (Part 14) auf zwei Wegen erfolgen.

Einerseits mittels einer Konfigurationsdatei (einem sogenannten binary-File) dessen Format im Standard spezifiziert ist. Dabei lässt der Standard jedoch offen, wie die Konfigurationsdatei dem jeweiligen Gerät, das als OPC UA PubSub-Kommunikationsteilnehmer zu konfigurieren ist, zur Verfügung gestellt wird. Dies muss somit auf proprietärem Wege erfolgen. Teilnehmer/Geräte, die diese Art der Konfiguration unterstützen, erfordern somit spezielle herstellerabhängige Tools und können dann - bezogen auf die Konfiguration - u.U. nicht interoperabel mit Geräten anderer Hersteller sein. Dieser Konfigurationsansatz ist somit problematisch, insbesondere im Hinblick auf OPC UA FLC.

Eine zweite Möglichkeit besteht darin, auf Methodenaufrufe im OPC UA Server des zu konfigurierenden Teilnehmers zurückzugreifen. Hierfür verbindet sich dann das Konfigurationstool mit dem OPC UA Server des zu konfigurierenden Gerätes/Teilnehmers und führt die entsprechenden Methodenaufrufe z.B. zum Anlegen von DataSetWriterGroups, und DataSetWriter (Publisher) bzw. DataSetReaderGroups und DataSetReaders (Subscriber) als auch zur Erstellung der DataSets durch (vgl. beispielsweise das Utthunga OPC UA PubSub-Konfigurationstool, welches über die OPC UA Foundation erhältlich ist). Dies erfordert, dass der zu konfigurierende Teilnehmer nicht nur den PubSub-Anteil sondern auch das bestehende Request/Response-Verfahren inkl. des OPC UA Server und Adressraums unterstützt, also einen OPC UA Server und Adressraum haben. Da das bestehende Request/Response-Verfahren auf TCP/IP basiert, muss der Teilnehmer/das Gerät somit auch TCP in seinem Netzwerkstack unterstützen. Dies sowie die für den OPC UA Server und das Request/Response-Protokoll (OPC UA Client/Server inklusive OPC UA SecureChannel) erforderlichen Ressourcen führen dazu, dass ein hoher Ressourcenbedarf insbesondere betreffend Flash und RAM besteht. TCP-Verbindungen müssen dabei ebenfalls vom Stack verwaltet werden und sind somit deutlich "teurer" als die Verwendung des verbindungslosen UDP.

Dies widerspricht der Anforderung, dass insbesondere IO-Geräte im industriellen Umfeld "klein" (im Sinne der verfügbaren HW-Ressourcen, z.B. Flash und RAM) sowie "günstig" sein sollen. Je mehr HW-Ressourcen erforderlich sind, desto teurer wird ein Gerät in der Regel.

Ausgehend davon besteht eine Aufgabe der vorliegenden Erfindung darin, eine Möglichkeit zu schaffen, Geräte als OPC UA PubSub Teilnehmer zu konfigurieren, mit der ein gegenüber dem Stand der Technik reduzierten Ressourcenbedarf der Geräte verbunden ist.

Diese Aufgabe wird gelöst durch ein Verfahren zum Konfigurieren wenigstens eines OPC UA PubSub Teilnehmers in einem insbesondere industriellen Netzwerk nach Anspruch 1, bei dem
a) auf einem zu dem wenigstens einen Teilnehmer separaten Konfigurationsmodul für den wenigstens einen Teilnehmer ein virtueller OPC UA PubSub Adressraum vorgesehen wird,
b) in dem virtuellen Adressraum mittels Methodenaufrufen eine Konfiguration für den wenigstens einen Teilnehmer vorgenommen und/oder eine für den wenigstens einen Teilnehmer bereits vorhandene Konfiguration geändert wird,
c) das Konfigurationsmodul die Konfiguration und/oder Konfigurationsänderung in wenigstens eine PubSub-Nachricht umsetzt,
d) die wenigstens eine PubSub-Nachricht an den wenigstens einen Teilnehmer übertragen wird, und
e) der wenigstens eine Teilnehmer gemäß der wenigstens einen PubSub-Nachricht konfiguriert wird.

Erfindungsgemäß erhält das Konfigurationsmodul von dem wenigstens einen Teilnehmer dessen Identifikation und dessen aktuelle Konfiguration als PubSub-Nachricht und sieht in Reaktion darauf in Schritt a) den virtuellen Adressraum für den wenigstens einen Teilnehmer vor. Außerdem tritt das Konfigurationsmodul einer ersten Publishing-Gruppe bei, deren Publisher es ist und auf der sich der wenigstens eine Teilnehmer subskribiert (subscribe). Zusätzlich tritt das Konfigurationsmodul einer zweiten Publishing-Gruppe bei, an der er als Subscriber teilnimmt. Darüber hinaus gibt das Konfigurationsmodul in der ersten Publishing-Gruppe die zweite Publishing-Gruppe bekannt, und der wenigstens eine Teilnehmer subskribiert auf der zweiten Publishing-Gruppe. Des Weiteren sendet der wenigstens eine Teilnehmer seine Identifikation und seine aktuelle Konfiguration als PubSub-Nachricht in die zweite Publishing-Gruppe.

Die Aufgabe wird darüber hinaus gelöst durch ein Automatisierungssystem zur Durchführung des erfindungsgemäßen Verfahrens nach Anspruch 11.

Das erfindungsgemäße Automatisierungssystem umfasst bevorzugt wenigstens ein den wenigstens einen Teilnehmer bildendes Feldgerät und ein zu dem wenigstens einen Feldgerät separates Konfigurationsmodul, wobei in dem Konfigurationsmodul ein virtueller Adressraum für das wenigstens eine Feldgerät vorgesehen oder vorsehbar ist, und das Konfigurationsmodul derart ausgebildet und/oder eingerichtet ist, dass es für den Fall, dass in dem bzw. einem virtuellen Adressraum für das wenigstens eine Feldgerät eine Konfiguration für das wenigstens eine Feldgerät vorgenommen und/oder eine für das wenigstens eine Feldgerät vorhandene Konfiguration geändert wird, die Konfiguration und/oder Konfigurationsänderung in wenigstens eine PubSub-Nachricht umsetzt und die wenigstens eine PubSub-Nachricht an das wenigstens eine Feldgerät überträgt, und das wenigstens eine Feldgerät dazu ausgebildet und/oder eingerichtet ist, sich gemäß der wenigstens einen PubSub-Nachricht zu konfigurieren.

Der Grundgedanke der vorliegenden Erfindung ist mit anderen Worten, dass der Adressraum des bzw. im Falle mehrerer des jeweiligen Teilnehmers von dem bzw. dem jeweiligen Teilnehmer an eine insbesondere zentrale Instanz im Netz "ausgelagert" mit anderen Worten virtualisiert wird. Der bzw. die Adressräume sind dann nicht mehr auf den Teilnehmern selber sondern virtuell in der insbesondere zentralen Instanz im Netz vorhanden, konkret dem Konfigurationsmodul, und ein Anwender kann wie gewohnt insbesondere mittels Methodenaufrufen in dem bzw. den virtuellen Adressräumen des oder der einzelnen Teilnehmer die Konfiguration vornehmen.

Bei Änderung einer Konfiguration eines Teilnehmers durch einen Anwender im virtuellen Adressraum im Konfigurationsmodul teilt das Konfigurationsmodul dies dem Teilnehmer erfindungsgemäß mittels PubSub mit und der bzw. der jeweilige Teilnehmer übernimmt die neue/geänderte Konfiguration. Das Konfigurationsmodul stellt praktisch einen zentralen Manager, insbesondere Konfigurationsmanager für den bzw. die Teilnehmer dar. Das Konfigurationsmodul kann durch Software der Hardware oder durch eine Kombination aus Software und Hardware implementiert sein.

Dank der Erfindung ist es nicht mehr zwingend erforderlich, dass der bzw. die Teilnehmer einen OPC UA Adressraum besitzen sowie OPC UA Client/Server-Funktionalität unterstützen. Dadurch kann im Netzwerkstack der Teilnehmer auch auf die Verwendung von TCP verzichtet werden, da OPC UA PubSub z.B. über UDP, Ethernet, TSN oder auch zukünftig 5G übertragen wird bzw. werden kann. Der Ressourcenbedarf (etwa Flash und RAM) des bzw. der Teilnehmer kann dadurch deutlich reduziert werden.

Der bzw. die Teilnehmer, bei dem bzw. denen es sich insbesondere um IO-Geräte handeln kann, und die in der Regel mit deutlich höheren Stückzahlen im Vergleich zu dem einzelnen zentralen Konfigurationsmodul vorhanden sind, können daher deutlich kostengünstiger werden. Darüber hinaus wird auch der Wartungsaufwand reduziert und eine kleinere Security-Angriffsfläche erzielt. Es besteht u.a. weniger Aufwand durch Firmware-Updates. Ein weiterer großer Vorteil ist, dass der bzw. der jeweilige Teilnehmer zum Zeitpunkt der Konfiguration durch den Anwender nicht verfügbar/online sein muss, da das von diesem separate Konfigurationsmodul die Konfiguration im zugehörigen virtuellen Adressraum speichert und diese dem Teilnehmer bei dessen nächstem "Auftauchen" mitgeteilt werden kann. Schließlich ist die erfindungsgemäße Vorgehensweise aus Anwendersicht völlig transparent, d.h. für den Anwender ergibt sich bei der Konfiguration kein Unterschied zu der bisherigen, bekannten Vorgehensweise.

Unter einem virtuellen bzw. virtualisierten Adressraum ist insbesondere ein Adressraum zu verstehen, der nicht bei bzw. auf dem oder im Falle mehrerer dem jeweiligen Teilnehmer liegt, insbesondere nicht auf der Hardware des bzw. des jeweiligen Teilnehmers, sondern von dem bzw. dem jeweiligen Teilnehmer separat implementiert ist, insbesondere auf Hardware, die von der Hardware des bzw. des jeweiligen Teilnehmers separat ist. Der bzw. die virtuellen Adressräume liegen auf bzw. in dem Konfigurationsmodul.

Bei der Konfiguration, die vorgenommen bzw. geändert wird, handelt es sich zweckmäßiger Weise um eine OPC UA PubSub Konfiguration, bevorzugt um eine solche im Sinne des Standards OPC Unified Architecture, Part 14: PubSub. Die Konfiguration bzw. Konfigurationsänderung betrifft bevorzugt wenigstens einen der Konfigurationsparameter, die in Kapitel 6 dieses Standards genannt sind.

Bei dem bzw. den virtuellen Adressräumen, die für den bzw. den jeweiligen Teilnehmer auf dem Konfigurationsmodul vorgesehen sind bzw. werden, handelt es sich zweckmäßiger Weise um einen bzw. mehrere OPC UA Adressräume, insbesondere im Sinne des vorgenannten Standards OPC Unified Architecture, Part 14: PubSub. Es kann sich insbesondere (jeweils) um einen Adressraum handeln, wie er in Figur 36 dargestellt ist. Das OPC UA Informationsmodell für die PubSub Konfiguration in Kapitel 9 dieses Standards spezifiziert die Objekte, die in einem OPC UA Adressraum verwendet werden, um eine OPC UA PubSub Konfiguration zu erzeugen bzw. zu ändern. Dass eine Konfiguration in dem auf dem Konfigurationsmodul vorgesehenen virtuellen Namensraum vorgenommen bzw. geändert wird bedeutet insbesondere, dass wenigstens einer der Konfigurationsparameter, die in Kapitel 6 des Standards OPC Unified Architecture, Part 14: PubSub genannt sind, in dem virtuellen Adressraum gespeichert bzw. geändert wird.

Der bzw. die virtuellen Adressräume, die auf dem Konfigurationsmodul für den bzw. den jeweiligen Teilnehmer vorgesehen sind, stellen insbesondere ein Informationsmodell für den bzw. den jeweiligen Teilnehmer dar. Es handelt sich insbesondere um ein Informationsmodell, das die Pub-Sub-Kommunikation und den Variablenhaushalt des bzw. des jeweiligen Teilnehmers betrifft. Beispielsweise kann der (jeweilige) virtuelle Adressraum/das entsprechende Informationsmodell auch die Information umfassen, welche Variablen Bestandteil des PublishedDataSet des (jeweiligen) Teilnehmers sind, und/oder die Abbildung von den DataSetItems einer SubscribedDataSet zu den Variablen im Variablenhaushalt. De bzw. die virtuellen Adressräume, die für den bzw. die Teilnehmer vorgesehen werden, können entsprechend auch als virtuelle Informationsadressräume, insbesondere virtuelle OP UA Informationsadressräume aufgefasst bzw. bezeichnet werden.

In weiterer vorteilhafter Ausgestaltung gilt, dass der virtuelle Adressraum des bzw. des jeweiligen Teilnehmers in einem Adressraum des Konfigurationsmoduls vorgesehen wird. Das Konfigurationsmodul hat dann mit anderen Worten einen eigenen Adressraum, innerhalb dem sich der bzw. die virtuellen Adressräume für den bzw. die Teilnehmer befindet bzw. befinden. Besonders bevorzugt gilt hinsichtlich des bzw. des jeweiligen virtuellen Adressraums, dass dieser bzw. diese in einem Adressraum des Konfigurationsmoduls "eingeblendet" ist bzw. sind.

Unter einer PubSub-Nachricht ist bevorzugt eine Nachricht bzw. Message zu verstehen, wie sie in dem genannten Standard Part 14 in Kapitel 5.3 beschrieben ist (siehe auch Figur 4 in diesem Kapitel).

In weiterer besonders bevorzugter Ausgestaltung gilt, dass in Schritt b) die Konfiguration in dem virtuellen Adressraum des wenigsten einen Teilnehmers mittels Methodenaufrufen vorgenommen und/oder geändert wird. Dies kann durch einen Anwender geschehen, der sich dazu vorbekannter Mittel bedienen kann, beispielsweise des Utthunga PubSub Konfigurationstools. Es sei angemerkt, dass alternativ oder zusätzlich zu dem Utthunga PubSub Konfigurationstool auch jedes andere Tool verwendet werden kann, mit dem insbesondere über Methodenaufrufe, bevorzugt Methodenaufrufe im Sinne des Standards OPC Unified Architecture, Part 14: PubSub (Siehe z.B: Seite 114 Figur 40 sowie Tabelle 112), Konfigurationen vorgenommen werden können. Das erfindungsgemäße Automatisierungssystem ist in bevorzugter Ausgestaltung entsprechend ausgebildet und/oder eingerichtet.

Als ganz besonders geeignet hat es sich erwiesen, wenn das Konfigurationsmodul durch einen OPC UA Global Discovery Server (OPC UA GDS) gegeben oder als Bestandteil eines solchen ausgebildet ist. Besonders bevorzugt ist das Konfigurationsmodul durch einen OPC UA Global Discovery Server gemäß der UA Specification Part 12 (Discovery and Global Services) gegeben oder Bestandteil eines solchen. Der OPC UA Global Discovery Server ist dann zweckmäßiger Weise um eine Publisher- und Subscriber-Funktionalität und einen eigenen Server Adressraum erweitert. Der virtuelle OPC UA PubSub Adressraum, der in Schritt a) für den einen Teilnehmer vorgesehen wird bzw. die virtuellen OPC UA PubSub Adressräume, die in Schritt a) für die mehreren Teilnehmer vorgesehen werden, können dann in dem Server Adressraum des OPC UA GDS abgebildet werden bzw. sein. Ein OPC UA Global Discovery Server ist in der Regel ohnehin vorhanden und kann - insbesondere in erweiterter Form - gut für die Auslagerung der Adressräume genutzt werden.

In bevorzugter Ausgestaltung erhält das Konfigurationsmodul von dem wenigstens einen Teilnehmer dessen Identifikation und dessen aktuelle Konfiguration bevorzugt, indem der wenigstens eine Teilnehmer die Identifikation und aktuelle Konfiguration als DataSet-MetaData sendet. Dann kennt das Konfigurationsmodul den wenigstens einen Teilnehmer und weiß, wie er zu adressieren ist.

Das Konfigurationsmodul kann den virtuellen Adressraum für den bzw. den jeweiligen Teilnehmer dann insbesondere in Reaktion darauf in Schritt a) vorsehen bzw. einrichten.

Das Konfigurationsmodul kann aufgrund der empfangenen Identifikations-/Konfigurations-Nachrichten sein Informationsmodell im Adressraum aufbauen, um den bzw. die Teilnehmerdort entsprechend darstellzustellen.

Das Konfigurationsmodul kommuniziert zu dem oder den Teilnehmern bevorzugt ausschließlich über die erste Publishing-Gruppe. Dies insbesondere, indem es Kommandos in Form von Events in diese Publishing-Gruppe sendet.

Entsprechend gilt in weiterer vorteilhafter Ausgestaltung, dass das Konfigurationsmodul die wenigstens eine PubSub-Nachricht, in welche es die Konfiguration und/oder Konfigurationsänderung umgesetzt hat, in Schritt d) in die erste Publishing-Gruppe sendet.

Die PubSub-Nachricht, in welche das Konfigurationsmodul die Konfiguration und/oder Konfigurationsänderung in Schritt d) umsetzt umfasst bevorzugter auch eine Adressierung des wenigstens einen Teilnehmers.

Das Konfigurationsmodul setzt in Schritt c) die Konfiguration und/oder Konfigurationsänderung insbesondere in wenigstens eine PubSub-Event-Nachricht um. So kann gegenüber dem bei PubSub üblicherweise zyklischen Senden eine ereignisbasierte Übertragung realisiert werden.

Den Erhalt der in Schritt d) übertragenen wenigstens einen PubSub-Nachricht bestätigt der wenigstens eine Teilnehmern zweckmäßiger Weise. Die Bestätigung kann dabei erfolgen, indem der wenigstens eine Teilnehmer die in Schritt d) durchgeführte Konfiguration in der zweiten Publishing-Gruppe published.

Dass der wenigstens eine Teilnehmer in Schritt e) gemäß der wenigstens einen PubSub-Nachricht konfiguriert wird kann beispielsweise bereits dadurch erfolgen bzw. umfassen, dass er die erhaltene PubSub-Nachricht bzw. zumindest Teile dieser speichert. Dies insbesondere, wenn diese die Konfiguration, etwa als binary-Datei, umfasst.

Der oder die Teilnehmer können Bestandteil eines industriellen Automatisierungssystem sein.

Bei dem oder bei wenigstens einem der Teilnehmer handelt es sich besonders bevorzugt um ein Feldgerät, insbesondere IO-Gerät. Entsprechend ist das bzw. wenigstens eines der Feldgeräte des erfindungsgemäßen Systems durch ein IO-Gerät gegeben. Selbstverständlich kann es auch sein, dass einer oder mehrere Teilnehmer, die über das erfindungsgemäße Verfahren konfiguriert werden, durch eine andere Art von Automatisierungskomponente, etwa ein HMI-Panle und/oder eine insbesondere speicherprogrammierbare Steuerung gegeben ist.

Die Geräte bzw. Komponenten des erfindungsgemäßen Automatisierungssystems sind bevorzugt über ein Netzwerk verbunden bzw. verbindbar, wie es aus dem Stand der Technik hinlänglich vorbekannt ist. Das Konfigurationsmodul kann beispielsweise auf einer zu den Feldgeräten separaten Recheneinrichtung implementiert sein, etwa einem Industrie-PC und/oder auf der Edge und/oder in einer Cloud, der bzw. die bzw. das über ein Netzwerk mit den Feldgeräten verbunden oder verbindbar ist. Ein weiterer Gegenstand der vorliegenden Erfindung ist ein Computerprogramm umfassend Programmcode-Mittel, die bei der Ausführung des Programms auf wenigstens einem Computer den wenigstens einen Computer veranlassen, die Schritte des erfindungsgemäßen Verfahrens durchzuführen.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt die
- Figur 1: eine rein schematische Darstellung eines Ausführungsbeispiels eines erfindungsgemäßen Automatisierungssystems; und
- Figur 2: ein konventionelles Automatisierungssystem.

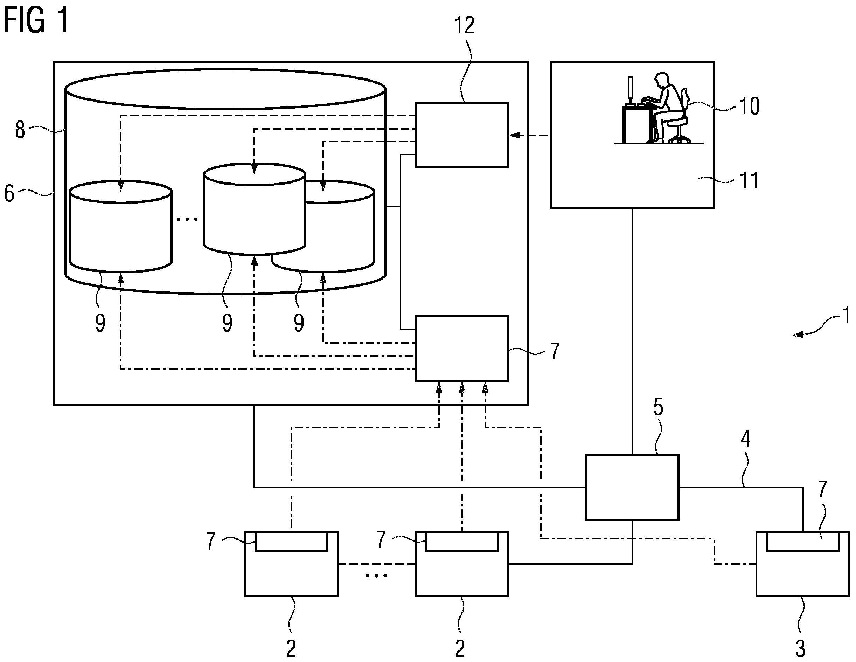

Die Figur 1 zeigt ein Ausführungsbeispiel eines erfindungsgemäßen Automatisierungssystems 1 in stark vereinfachter, rein schematischer Darstellung.

Dieses umfasst eine Mehrzahl von Komponenten, u.a. mehrere Feldgeräte, von denen zumindest einige durch IO-Geräte gegeben sind, und speicherprogrammierbare Steuerungen. In der Figur sind von der Vielzahl der Komponenten beispielshaft zwei IO-Geräte 2 sowie eine speicherprogrammierbare Steuerung 3 dargestellt. Über die "..." zwischen den beiden IO-Geräten 2 ist angedeutet, dass natürlich mehr IO-Geräte 2 vorhanden sein können bzw. vorhanden sind. Die Steuerung 3 und IO-Geräte 2 kommen, wie aus dem Stand der Technik hinlänglich vorbekannt, zum Einsatz, um einen nicht weiter dargestellten technischen Prozess zu überwachen und zu steuern. Selbstverständlich ist es in ebenfalls an sich vorbekannter Weise möglich, dass auch mehr als eine Steuerung 3 und/oder noch andere Komponenten, etwa HMI-Panels und/oder dergleichen vorgesehen sind.

Die Komponenten des Automatisierungssystems 1 sind zum Datenaustausch über ein Netzwerk 4 miteinander verbunden. Das Netzwerk 4 umfasst mehrere Switche 5, von denen in der Figur einer beispielshaft gezeigt ist.

Das Automatisierungssystem 1 umfasst ferner ein Konfigurationsmodul 6, welches bei dem dargestellten Ausführungsbeispiel durch einen OPC UA Global Discovery Server (OPC UA GDS) gegeben ist, der auf einem von den weiteren Komponenten des Systems 1 separaten Rechner, vorliegend Industrie-PC implementiert ist, welcher ebenfalls an dem Netzwerk 4 teilnimmt. Der OPC UA Global Discovery Server ist dabei um eine Publisher- und Subscriber-Funktionalität, die durch eine entsprechende funktionale Einheit 7 Software-basiert implementiert ist, und einen eigenen Server Adressraum 8 erweitert.

Die IO-Geräte 2 und die Steuerung 3 umfassen auch eine solche funktionale Einheit 7, über welche die PubSub-Funktion bei diesen implementiert ist. Die funktionalen Einheiten 7 der IO-Geräte 2 sind vorliegend ebenfalls Software-implementiert.

Das Konfigurationsmodul 6 dient als zentraler Manager, der für die OPC UA PubSub Kommunikationskonfiguration der IO-Geräte 2 und bei dem dargestellten Beispiel auch der Steuerung 3 zum Einsatz kommt.

Die Konfiguration erfolgt unter Durchführung des im Folgenden beschriebenen Ausführungsbeispiels des erfindungsgemäßen Verfahrens.

In einem ersten Schritt tritt das Konfigurationsmodul 6 zunächst eine ersten Publishing-Gruppe bei (join), deren Publisher es ist. Auf dieser subscriben sich die Teilnehmer bildenden IO-Geräte 2 und die Steuerung 3.

Das Konfigurationsmodul 6 kann dem bzw. den Teilnehmern 2, 3 beispielsweise durch Verwendung einer well-known Multicast-Gruppe mitgeteilt werden bzw. vorab mitgeteilt worden sein.

Das Konfigurationsmodul 6 tritt dann noch einer zweiten Publishing-Gruppe bei (join), an der es als Subscriber teilnimmt.

Anschließend gibt das Konfigurationsmodul 6 in der ersten Publishing-Gruppe die zweite Publishing-Gruppe bekannt, auf die sich die IO-Geräte 2 und die Steuerung 3 subscriben. Hierdurch gibt sich das Konfigurationsmodul 6 als zuständig für die IO-Geräte 2 und die Steuerung 3 bekannt.

Das Konfigurationsmodul 6 kommuniziert zu den IO-Geräten 2 bzw. der Steuerung 3 ausschließlich über die erste Publishing-Gruppe. Dies insbesondere, indem es Kommandos in Form von Events in diese Publishing-Gruppe sendet.

Das Konfigurationsmodul 6 erhält von dem jeweiligen IO-Gerät 2 und der Steuerung 3 jeweils deren Identifikation und deren aktuelle Konfiguration, indem das jeweilige IO-Gerät 2 bzw. die Steuerung 3 die Identifikation und aktuelle Konfiguration als PubSub-Nachricht, vorliegend als DataSet-MetaData in die zweite Publishing-Gruppe sendet. Dann kennt das Konfigurationsmodul 6 den jeweiligen Teilnehmer 2, 3 und weiß, wie er zu adressieren ist.

Das Konfigurationsmodul 6 sieht dann für jeden Teilnehmer 2, 3 deren Identifikation und aktuelle Konfiguration es erhalten hat, einen virtuellen Adressraum 9 innerhalb seines Server Adressraumes 8 vor. Das Konfigurationsmodul 6 hat dann einen Server Adressraum 8, der virtuelle Adressräume 9 für alle Teilnehmer umfasst, für die das Konfigurationsmodul 6 zuständig ist.

Das Konfigurationsmodul 6 baut mit anderen Worten aufgrund der empfangenen Identifikations-/Konfigurations-Nachrichten der Teilnehmer 2, 3 sein Informationsmodell im Adressraum auf, um den bzw. die Teilnehmer dort entsprechend darstellzustellen. Der jeweilige virtuelle Adressraum 9 umfasst bevorzugt den Variablenhaushalt des jeweiligen Teilnehmers 2, 3 (z.B. Published DataSet).

In der Figur der Server Adressraum 8 und darin beispielhaft die virtuellen Adressräume 9 für die beiden IO-Geräte 2 und die Steuerung 3 schematisch innerhalb des Konfigurationsmoduls 6 angedeutet. Auch hier ist über "..." angedeutet, dass mehr virtuelle Adressräume 9 für mehr Teilnehmer 2, 3 vorgesehen sein bzw. werden können.

Anschließend kann ein Anwender 10 in dem virtuellen Adressraum 9 des jeweiligen Teilnehmers 2, 3 eine Konfiguration für diesen wie gewohnt mittels Methodenaufrufen vornehmen und/oder eine für den jeweiligen Teilnehmer 2, 3 bereits vorhandene Konfiguration wie gewohnt mittels Methodenaufrufen ändern, etwa mittels eines OPC UA Clients und beispielsweise unter Verwendung des Utthunga PubSub Konfigurationstools, welches auf einem PC 11 installiert sein kann.

Dafür kann das Konfigurationsmodul 6 in an sich bekannter Weise einen OPC UA Server 12 aufweisen, und bevorzugt das vorbekannte Request/Response-Verfahren genutzt werden.

Es sei angemerkt, dass in der Figur durch Pfeile mit gestrichelter Linie die Methodenaufrufe und durch Pfeile mit strichpunktierter Linie die PubSub-Kommunikation/der Datenfluss betreffend die Konfigurationsinfo andeutet ist.

Wird in einem virtuellen Namensraum 9 eine Konfiguration für einen Teilnehmer 2, 3 vorgesehen bzw. geändert (z.B. eine neue WriterGroup erzeugt), setzt das Konfigurationsmodul 6 die Konfiguration und/oder Konfigurationsänderung in eine PubSub-Nachricht, vorliegend eine PubSub-Event-Nachricht um. Die Umsetzung der Konfiguration bzw. Konfigurationsänderung erfolgt bei dem dargestellten Ausführungsbeispiel mittels einer PubSub-Einheit 7 des Konfigurationsmoduls 6.

Die PubSub-Event-Nachricht wird anschließend an den bzw. den jeweiligen Teilnehmer 2, 3 übertragen. Hierzu wird die PubSub-Event-Nachricht von dem Konfigurationsmodul 6 in die erste Publishing-Gruppe gesendet. Die PubSub-Event-Nachricht enthält dabei in den Nutzdaten zweckmäßiger Weise auch die Adressierung des angesprochenen Gerätes 2, 3. Sie kann ferner wenigstens ein Kommando umfassen.

Der bzw. der jeweilige Teilnehmer 2, 3 konfiguriert sich dann gemäß der PubSub-Event-Nachricht. Dies kann beispielsweise bereits dadurch erfolgen, dass er die erhaltene PubSub-Event-Nachricht bzw. zumindest Teile dieser speichert. Bevorzugt ist vorgesehen, dass der bzw. der jeweilige Teilnehmer 2, 3 weiß, wie auf wenigstens ein enthaltenes Kommando reagieren muss, beispielsweise durch Speicherung.

Ferner bestätigt der jeweilige Teilnehmer 2, 3 zweckmäßiger weise den Erhalt der übertragenen PubSub-Event-Nachricht. Die Bestätigung kann z.B. erfolgen, indem der jeweilige Teilnehmer 2, 3 die durchgeführte Konfiguration in der zweiten Publishing-Gruppe published. Insbesondere kann die Bestätigung gemäß Standard Part 14 durch Publishen der aktuellen Konfig als DataSetMetaData erfolgen.

Es sei angemerkt, dass der vorstehend beispielhaft für die IO-Geräte 2 und die Steuerung 3 als Teilnehmer beschriebene Ablauf gleichermaßen für etwaige weitere Komponenten erfolgen kann, sowohl weitere IO-Geräte 2 und Steuerungen 3 als auch Komponenten anderer Art.

Im Anschluss an die erfindungsgemäß durchgeführte Konfiguration kann insbesondere die Maschine-zu-Maschine Kommunikation über OPC UA PubSub erfolgen, während der Prozessdatenaustausch zwischen den IO-Geräten 2 und der Steuerung 3 bevorzugt wie bisher über Profinet/Profinet TSN erfolgen kann. OPC UA PubSub ist somit eine passende Ergänzung zum Feldbus Profinet (TSN).

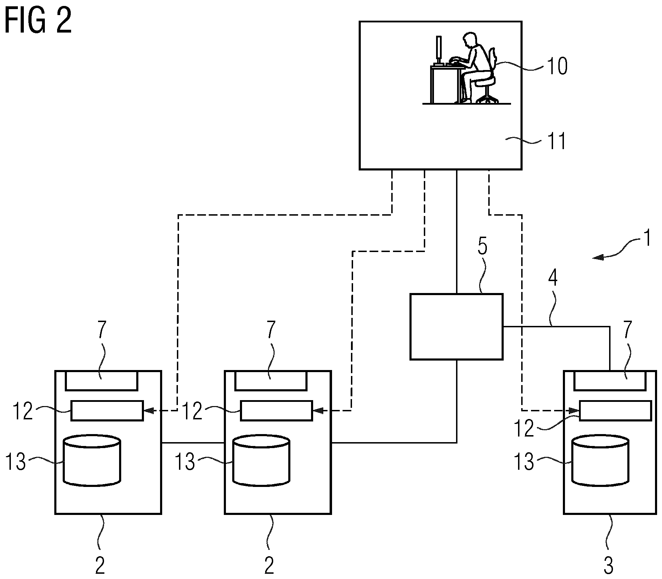

Dank der beschriebenen Vorgehensweise ist es dabei nicht mehr zwingend erforderlich, dass der bzw. die Teilnehmer 2, 3 einen lokal auf ihnen vorgesehenen OPC UA Adressraum 13 besitzen sowie OPC UA Client/Server-Funktionalität 14 unterstützen, wie es bei den aus dem Stand der Technik vorbekannten Automatisierungssystemen 1 der Fall ist. Ein solches ist zum Vergleich beispielhaft und rein schematisch in Figur 2 dargestellt. In Analogie zu Figur 1 sind von den Komponenten beispielhaft zwei IO-Geräte 2 und eine Steuerung 3 gezeigt.

Aufgrund der erfindungsgemäßen Vorgehensweise kann im Netzwerkstack der Teilnehmer 2, 3 auf die Verwendung von TCP verzichtet werden, da OPC UA PubSub z.B. über UDP, Ethernet, TSN bzw. zukünftig 5G übertragen wird bzw. werden kann. Der Ressourcenbedarf (etwa Flash und RAM) der Teilnehmer 2, 3 kann dadurch deutlich reduziert werden. Die Teilnehmer 2, 3 können deutlich kostengünstiger werden. Ganz besonders vorteilhaft ist die erfindungsgemäße Vorgehensweise für Komponenten, die in der Regel in höheren Stückzahlen erforderlich sind, wie Feldgeräte, etwa in Form von IO-Geräten 2.

## Patentansprüche

1. Verfahren zum Konfigurieren wenigstens eines OPC UA PubSub Teilnehmers (2, 3) in einem insbesondere industriellen Netzwerk (4), bei dem
a) auf einem zu dem wenigstens einen Teilnehmer (2, 3) separaten Konfigurationsmodul (6) für den wenigstens einen Teilnehmer (2, 3) ein virtueller Adressraum (9) vorgesehen wird,
b) in dem virtuellen Adressraum (9) des wenigstens einen Teilnehmers (2, 3) eine Konfiguration für den wenigstens einen Teilnehmer (2, 3) vorgenommen und/oder eine für den wenigstens einen Teilnehmer (2, 3) bereits vorhandene Konfiguration geändert wird,
c) das Konfigurationsmodul (6) die Konfiguration und/oder Konfigurationsänderung in wenigstens eine PubSub-Nachricht umsetzt,
d) die wenigstens eine PubSub-Nachricht an den wenigstens einen Teilnehmer (2, 3) übertragen wird, und
e) der wenigstens eine Teilnehmer (2, 3) gemäß der wenigstens einen PubSub-Nachricht konfiguriert wird,
**dadurch gekennzeichnet, dass**
das Konfigurationsmodul (6) von dem wenigstens einen Teilnehmer (2, 3) dessen Identifikation und dessen aktuelle Konfiguration als PubSub-Nachricht erhält und das Konfigurationsmodul (6) in Reaktion darauf in Schritt a) den virtuellen Adressraum (9) für den wenigstens einen Teilnehmer vorsieht,
das Konfigurationsmodul (6) einer ersten Publishing-Gruppe beitritt, deren Publisher es ist, und auf der sich der wenigstens eine Teilnehmer (2, 3) subskribiert, und das Konfigurationsmodul (6) einer zweiten Publishing-Gruppe beitritt,
an der er als Subscriber teilnimmt,
das Konfigurationsmodul (6) in der ersten Publishing-Gruppe die zweite Publishing-Gruppe bekannt gibt, und sich der wenigstens eine Teilnehmer (2, 3) auf der zweiten Publishing-Gruppe subskribiert, und der wenigstens eine Teilnehmer (2, 3) seine Identifikation und seine aktuelle Konfiguration als PubSub-Nachricht in die zweite Publishing-Gruppe sendet.

2. Verfahren nach Anspruch 1,
**dadurch gekennzeichnet, dass**
in Schritt a) der virtuelle Adressraum (9) für den wenigstens einen Teilnehmer in einem Adressraum (8) des Konfigurationsmoduls vorgesehen wird, und/oder in Schritt b) die Konfiguration in dem virtuellen Adressraum (9) des wenigsten einen Teilnehmers (2, 3) mittels Methodenaufrufen vorgenommen und/oder geändert wird.

3. Verfahren nach einem der Ansprüche 1 oder 2,
**dadurch gekennzeichnet, dass**
das Konfigurationsmodul (6) die wenigstens eine PubSub-Nachricht, in welche es die Konfiguration und/oder Konfigurationsänderung umgesetzt hat, in Schritt d) in die erste Publishing-Gruppe sendet.

4. Verfahren nach einem der vorhergehenden Ansprüche, **dadurch gekennzeichnet, dass**
das Konfigurationsmodul (6) in Schritt c) die Konfiguration und/oder Konfigurationsänderung in wenigstens eine PubSub-Event-Nachricht umsetzt.

5. Verfahren nach einem der vorhergehenden Ansprüche, **dadurch gekennzeichnet, dass**
die PubSub-Nachricht, in welche das Konfigurationsmodul (6) die Konfiguration und/oder Konfigurationsänderung in Schritt d) umsetzt auch eine Adressierung des wenigstens einen Teilnehmers (2, 3) umfasst.

6. Verfahren nach einem der vorhergehenden Ansprüche, **dadurch gekennzeichnet, dass**
der wenigstens eine Teilnehmer (2, 3) den Erhalt der in Schritt d) übertragenen wenigstens einen PubSub-Nachricht bestätigt.

7. Verfahren nach einem der vorhergehenden Ansprüche, **dadurch gekennzeichnet, dass**
die Bestätigung erfolgt, indem der wenigstens eine Teilnehmer (2, 3) die in Schritt d) durchgeführte Konfiguration in der zweiten Publishing-Gruppe published.

8. Verfahren nach einem der vorhergehenden Ansprüche, **dadurch gekennzeichnet, dass**
der wenigstens eine Teilnehmer (2, 3) oder wenigstens einer der Teilnehmer (2, 3) ein Feldgerät, insbesondere ein IO-Gerät ist.

9. Verfahren nach einem der vorhergehenden Ansprüche, **dadurch gekennzeichnet, dass**
der wenigstens eine Teilnehmer (2, 3) Bestandteil eines industriellen Automatisierungssystems (1) ist.

10. Verfahren nach einem der vorhergehenden Ansprüche, **dadurch gekennzeichnet, dass**
das Konfigurationsmodul (6) durch einen OPC UA Discovery Server gegeben oder als Bestandteil eines solchen ausgebildet ist, wobei der OPC UA Discovery Server bevorzugt um eine Publisher- und Subscriber-Funktionalität (7) und einen eigenen Server Adressraum (8) erweitert ist, und der virtuelle Adressraum (9), der in Schritt a) für den wenigstens einen Teilnehmer (2, 3) vorgesehen wird, in dem Server Adressraum (8) abgebildet wird.

11. Automatisierungssystem (1) zur Durchführung des Verfahrens nach einem der vorhergehenden Ansprüche, umfassend wenigstens ein den wenigstens einen Teilnehmer bildendes Feldgerät (2) und ein zu dem wenigstens einen Feldgerät (2) separates Konfigurationsmodul (6), wobei in dem Konfigurationsmodul (6) ein virtueller Adressraum (9) für das wenigstens eine Feldgerät (2) vorgesehen oder vorsehbar ist, und das Konfigurationsmodul (6) derart ausgebildet und/oder eingerichtet ist, dass es für den Fall, dass in dem bzw. einem virtuellen Adressraum (9) für das wenigstens eine Feldgerät (2) eine Konfiguration für das wenigstens eine Feldgerät (2) vorgenommen und/oder eine für das wenigstens eine Feldgerät (2) vorhandene Konfiguration geändert wird, die Konfiguration und/oder Konfigurationsänderung in wenigstens eine PubSub-Nachricht umsetzt und die wenigstens eine PubSub-Nachricht an das wenigstens eine Feldgerät (2) überträgt, und das wenigstens eine Feldgerät (2) dazu ausgebildet und/oder eingerichtet ist, sich gemäß der wenigstens einen PubSub-Nachricht zu konfigurieren,
**dadurch gekennzeichnet, dass** das Konfigurationsmodul (6) derart ausgebildet und/oder eingerichtet ist, dass es von dem wenigstens einen Teilnehmer (2, 3) dessen Identifikation und dessen aktuelle Konfiguration als PubSub-Nachricht erhält und in Reaktion darauf in Schritt a) den virtuellen Adressraum (9) für den wenigstens einen Teilnehmer vorsieht,
dass das Konfigurationsmodul (6) derart ausgebildet und/oder eingerichtet ist, dass es einer ersten Publishing-Gruppe beitritt, deren Publisher es ist, und einer zweiten Publishing-Gruppe beitritt, an der er als Subscriber teilnimmt, dass das Konfigurationsmodul (6) derart ausgebildet und/oder eingerichtet ist, dass es in der ersten Publishing-Gruppe die zweite Publishing-Gruppe bekannt gibt, und dass der wenigstens eine Teilnehmer (2,3) derart ausgebildet und/ oder eingerichtet ist, sich auf der zweiten Publishing-Gruppe zu subskribieren und seine Identifikation und seine aktuelle Konfiguration als PubSub-Nachricht in die zweite Publishing-Gruppe zu senden.

12. Computerprogramm umfassend Programmcode-Mittel, die bei der Ausführung des Programms auf wenigstens einem Computer den wenigstens einen Computer veranlassen, die Schritte des Verfahrens nach einem der Ansprüche 1 bis 10 durchzuführen.

13. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.

## Claims

1. Method for configuring at least one OPC UA PubSub subscriber (2, 3) in an in particular industrial network (4), wherein
a) a virtual address space (9) for the at least one subscriber (2, 3) is provided on a configuration module (6) that is separate from the at least one subscriber (2, 3),
b) a configuration for the at least one subscriber (2, 3) is performed and/or a configuration that already exists for the at least one subscriber (2, 3) is changed in the virtual address space (9) of the at least one subscriber (2, 3),
c) the configuration module (6) converts the configuration and/or configuration change into at least one PubSub message,
d) the at least one PubSub message is transmitted to the at least one subscriber (2, 3), and
e) the at least one subscriber (2, 3) is configured according to the at least one PubSub message,
**characterized in that**
the configuration module (6) receives from the at least one subscriber (2, 3) the identification thereof and the present configuration thereof as a PubSub message and, in response thereto, the configuration module (6) provides the virtual address space (9) for the at least one subscriber in step a),
the configuration module (6) joins a first publishing group, for which it is the publisher, and to which the at least one subscriber (2, 3) subscribes, and the configuration module (6) joins a second publishing group, in which it participates as a subscriber,
the configuration module (6) announces the second publishing group in the first publishing group, and the at least one subscriber (2, 3) subscribes to the second publishing group, and the at least one subscriber (2, 3) sends its identification and its present configuration to the second publishing group as a PubSub message.

2. Method according to Claim 1,
**characterized in that**
in step a) the virtual address space (9) for the at least one subscriber is provided in an address space (8) of the configuration module, and/or in step b) the configuration in the virtual address space (9) of the at least one subscriber (2, 3) is performed and/or changed by means of method calls.

3. Method according to either of Claims 1 and 2, **characterized in that**
the configuration module (6) sends the at least one PubSub message into which it has converted the configuration and/or configuration change to the first publishing group in step d).

4. Method according to one of the preceding claims, **characterized in that**
the configuration module (6) converts the configuration and/or configuration change into at least one PubSub Event message in step c).

5. Method according to one of the preceding claims, **characterized in that**
the PubSub message into which the configuration module (6) converts the configuration and/or configuration change in step d) also comprises an addressing of the at least one subscriber (2, 3).

6. Method according to one of the preceding claims, **characterized in that**
the at least one subscriber (2, 3) acknowledges receipt of the at least one PubSub message transmitted in step d).

7. Method according to one of the preceding claims, **characterized in that**
the acknowledgement is provided by virtue of the at least one subscriber (2, 3) publishing the configuration performed in step d) in the second publishing group.

8. Method according to one of the preceding claims, **characterized in that**
the at least one subscriber (2, 3) or at least one of the subscribers (2, 3) is a field device, in particular an IO device.

9. Method according to one of the preceding claims, **characterized in that**
the at least one subscriber (2, 3) is part of an industrial automation system (1).

10. Method according to one of the preceding claims, **characterized in that**
the configuration module (6) is afforded by an OPC UA Discovery Server or is in the form of part of such, the OPC UA Discovery Server preferably being extended by a publisher and subscriber functionality (7) and a server address space (8) of its own, and the virtual address space (9) provided for the at least one subscriber (2, 3) in step a) being mapped in the server address space (8).

11. Automation system (1) for performing the method according to one of the preceding claims, comprising at least one field device (2) that forms the at least one subscriber and a configuration module (6) that is separate from the at least one field device (2), wherein a virtual address space (9) for the at least one field device (2) is provided or providable in the configuration module (6), and the configuration module (6) is designed and/or set up in such a way that, if a configuration for the at least one field device (2) is performed and/or a configuration that exists for the at least one field device (2) is changed in the or a virtual address space (9) for the at least one field device (2), it converts the configuration and/or configuration change into at least one PubSub message and transmits the at least one PubSub message to the at least one field device (2), and the at least one field device (2) is designed and/or set up to configure itself according to the at least one PubSub message,
**characterized in that** the configuration module (6) is designed and/or set up in such a way that it receives from the at least one subscriber (2, 3) the identification thereof and the present configuration thereof as a PubSub message and, in response thereto, provides the virtual address space (9) for the at least one subscriber in step a),
**in that** the configuration module (6) is designed and/or set up in such a way that it joins a first publishing group, for which it is the publisher, and joins a second publishing group, in which it participates as a subscriber,
**in that** the configuration module (6) is designed and/or set up in such a way that it announces the second publishing group in the first publishing group, and **in that** the at least one subscriber (2, 3) is designed and/or set up to subscribe to the second publishing group and to send its identification and its present configuration to the second publishing group as a PubSub message.

12. Computer program comprising program code means that, when the program is executed on at least one computer, cause the at least one computer to perform the steps of the method according to one of Claims 1 to 10.

13. Computer-readable medium comprising instructions that, when executed on at least one computer, cause the at least one computer to perform the steps of the method according to one of Claims 1 to 10.

## Revendications

1. Procédé de configuration d'au moins un participant (2, 3) dans un réseau (4) notamment industriel, dans lequel
a) on prévoit pour le au moins un participant (2, 3) un espace (9) d'adresse virtuelle sur un module (6) de configuration séparé du au moins un participant (2, 3),
b) dans l'espace (9) d'adresse virtuelle du au moins un participant (2, 3), on effectue une configuration pour le au moins un participant (2, 3) et/ou on modifie une configuration déjà présente pour le au moins un participant (2, 3),
c) le module (6) de configuration transforme la configuration et/ou la modification de configuration en au moins un message pubsub,
d) on transmet le au moins un message pubsub au au moins un participant (2, 3), et
e) on configure le au moins un participant (2, 3) suivant le au moins un message pubsub,
**caractérisé en ce que**
le module (6) de configuration reçoit du au moins un participant (2, 3) son identification et sa configuration instantanée comme message pubsub et le module (6) de configuration, en réaction à cela au stade a) prévoit l'espace (9) d'adresse virtuelle pour le au moins un participant, le module (6) de configuration adhère à un premier groupe publishing, dont il est le publisher et auquel le au moins un participant (2, 3) souscrit, et le module (6) de configuration adhère à un deuxième groupe publishing, auquel il participe comme souscripteur,
le module (6) de configuration fait connaître le deuxième groupe publishing dans le premier groupe publishing, et le au moins un participant (2, 3) souscrit au deuxième groupe publishing, et le au moins un participant (2, 3) envoie son identification et sa configuration instantanée comme message pubsub au deuxième groupe publishing.

2. Procédé suivant la revendication 1,
**caractérisé en ce qu'**
au stade a), on prévoit l'espace (9) d'adresse virtuelle pour le au moins un participant dans un espace (8) d'adresse du module de configuration et/ou au stade b), on effectue et/ou on modifie au moyen d'appels de méthode, la configuration dans l'espace (9) d'adresse virtuelle du au moins un participant (2, 3).

3. Procédé suivant l'une des revendications 1 ou 2, **caractérisé en ce que**
le module (6) de configuration envoie, dans le premier groupe publishing au stade d), le au moins un message pubsub, dans lequel il a transformé la configuration et/ou la modification de configuration.

4. Procédé suivant l'une des revendications précédentes, **caractérisé en ce que**
le module (6) de configuration transforme au stade c) la configuration et/ou la modification de configuration en au moins un message d'événement pubsub.

5. Procédé suivant l'une des revendications précédentes, **caractérisé en ce que**
le message pubsub, dans lequel le module (6) de configuration a transformé au stade d) la configuration et/ou la modification de configuration, comprend aussi un adressage du au moins un participant (2, 3).

6. Procédé suivant l'une des revendications précédentes, **caractérisé en ce que**
le au moins un participant (2, 3) confirme la réception du au moins un message pubsub transmis au stade d).

7. Procédé suivant l'une des revendications précédentes, **caractérisé en ce que**
la confirmation s'effectue par le fait que le au moins un participant (2, 3) publie, dans le deuxième groupe publishing, la configuration effectuée au stade d).

8. Procédé suivant l'une des revendications précédentes, **caractérisé en ce que**
le au moins un participant (2, 3) ou au moins l'un des participants (2, 3) est un appareil sur site, notamment un appareil IO.

9. Procédé suivant l'une des revendications précédentes, **caractérisé en ce que**
le au moins un participant (2, 3) est une partie constitutive d'un système (1) d'automatisation industriel.

10. Procédé suivant l'une des revendications précédentes, **caractérisé en ce que**
le module (6) de configuration est donné par un OPCUA discovery server ou est constitué comme partie constitutive d'un tel serveur, dans lequel le OPCUA discovery server est étendu, de préférence d'une fonctionnalité (7) publisher et souscripteur et d'un espace (8) d'adresse de serveur propre et l'espace (9) d'adresse virtuel, qui est prévu au stade a) pour le au moins un participant (2, 3) est reproduit dans l'espace (8) d'adresse serveur.

11. Système (1) d'automatisation pour effectuer le procédé suivant l'une des revendications précédentes, comprenant au moins un appareil (2) sur site formant le au moins un participant et un module (6) de configuration séparé du au moins un appareil (2) sur site, dans lequel, un espace (9) d'adresse virtuel, pour le au moins un appareil (2) sur site est prévu dans le module (6) de configuration ou peut l'être, et le module (6) de configuration est constitué et/ou conçu de manière, dans le cas où, dans le ou dans un espace (9) d'adresse virtuel pour le au moins un appareil (2) sur site, une configuration pour le au moins un appareil (2) sur site est effectuée et/ou une configuration présente pour le au moins appareil (2) sur site est modifiée, à transformer la configuration et/ou la modification de configuration en au moins un message pubsub et à transmettre le au moins un message pubsub au au moins un appareil (2) sur site, et le au moins un appareil (2) sur site est constitué et/ou conçu pour se configurer suivant le au moins un message pubsub,
**caractérisé en ce que** le module (6) de configuration est constitué et/ou conçu de manière à recevoir du au moins un participant (2, 3) son identification et sa configuration instantanée comme message pubsub et, en réaction à cela au stade a) à prévoir l'espace (9) d'adresse virtuel pour le au moins un participant, **en ce que** le module (6) de configuration est constitué et/ou conçu de manière à adhérer à un premier groupe publishing, dont il est le publisher, et à un deuxième groupe publishing, auquel il participe comme souscripteur,
**en ce que** le module (6) de configuration est constitué et/ou conçu de manière à faire connaître, dans le premier groupe publishing, le deuxième groupe publishing, et **en ce que** le au moins un participant (2, 3) est constitué et/ou conçu de manière à souscrire au deuxième groupe publishing et à envoyer son identification et sa configuration instantanée comme message pubsub dans le deuxième groupe publishing.

12. Programme d'ordinateur comprenant des moyens de code de programme, qui, lors de l'exécution du programme sur au moins un ordinateur, font que le au moins un ordinateur effectue les stades du procédé suivant l'une des revendications 1 à 10.

13. Support, déchiffrable par ordinateur, qui comprend des instructions, qui, lorsqu'elles sont exécutées sur au moins un ordinateur, font que le au moins un ordinateur effectue les stades du procédé suivant l'une des revendications 1 à 10.
